# FASCICULE DE BREVET EUROPEEN

(11) **EP 3 689 132 B1**
(45) Date de publication et mention de la délivrance du brevet: **02.12.2026**
(21) Numéro de dépôt: 20152936.9
(22) Date de dépôt: 21.01.2020
(51) Int. Cl.: A01G 9/02

(54) **DISPOSITIF POUR LA CULTURE DE PLANTS DE VEGETALISATION, FORMANT BARDAGE, PROCEDE DE FABRICATION DUDIT DISPOSITIF**
VORRICHTUNG ZUR ANZUCHT VON BEPFLANZUNGSPFLANZEN, DIE EINE VERKLEIDUNG BILDEN, VERFAHREN ZUR HERSTELLUNG DIESER VORRICHTUNG
DEVICE FOR GROWING PLANTS FOR LANDSCAPING AND CLADDING, AND METHOD FORMANUFACTURING SAID DEVICE

(30) Priorité: 29.01.2019 FR 1900798
(43) Date de publication de la demande: 05.08.2020
(73) Titulaire: Vertige International, 33150 Cenon (FR)
(72) Inventeur: DEMONCHY, Didier, 33120 Arcachon (FR)
(74) Mandataire: Aquinov

(56) Documents cités:
- EP-A1- 2 213 158
- EP-A1- 2 493 282
- EP-A1- 2 687 648
- CN-A- 105 493 935
- JP-A- 2006 042 775
- NL-C1- 1 030 180

## Description

L'invention concerne un bardage pour la culture de plants de végétalisation formant bardage. L'invention couvre également le procédé de fabrication dudit bardage.

On connaît les murs végétalisés qui assurent une climatisation naturelle par l'extérieur, en plus des vertus chlorophylliennes et de l'aspect esthétique. Ces murs végétalisés comprennent des plaques avec des contenants venus de moulage en saillie de ladite plaque. Ces contenants sont de volume limité, chaque plaque étant destinée à être rapportée sur une structure de support mécanique sous forme d'une ossature elle-même rapportée sur la façade à végétaliser. Ces plaques sont généralement réalisées en matériau composite ou plus souvent en matière plastique renforcée. Un premier problème est l'arrosage de ce type de contenants avec l'évacuation des eaux de trop plein, notamment en cas de précipitations abondantes. De telles végétalisations sont complexes à mettre en œuvre et surtout n'ont aucune contribution aux fonctionnalités de protection de la paroi du bâtiment. L'ossature et les plaques à contenants ne peuvent en aucun cas être considérées comme un bardage et être intégrées dans la constitution de la paroi dudit bâtiment. Un autre inconvénient est la durabilité de la matière plastique ou du composite en regard des conditions d'exposition au soleil et à ses rayons ultraviolets, aux variations d'hygrométrie, à la résistance en milieu humide permanent et aux conditions de variations de pH mais aussi aux dilatations liées aux écarts de températures.

De plus, lors des écarts de températures, la tenue des contenants eux-mêmes varie et les déformations de la forme esthétique extérieure se produisent régulièrement, ce qui est particulièrement disgracieux.

On connaît un brevet EP 2 493 282 qui illustre ces problématiques de l'art antérieur et qui propose des solutions de raidisseurs pour tenter de conférer des propriétés mécaniques suffisantes aux plaques de contenants en ménageant des nervures dans le moulage lui-même. Néanmoins, la déformabilité subsiste et de telles plaques ne peuvent en aucun cas constituer un bardage au sens du bâtiment.

Le but de la présente invention est de proposer un bardage de paroi, avec une protection totale de la paroi, avec une résistance aux conditions de culture, quel que soit le pH engendré par le végétal cultivé, une résistance mécanique intrinsèque qui rend le bardage indéformable, résistant aux conditions de vent et de charge et insensible aux variations de températures. De plus, l'invention couvre la juxtaposition de bardages selon l'invention, dans le sens horizontal comme dans le sens vertical. Les garanties du bâtiment peuvent être accordées à un bardage selon la présente invention. Le montage des bardages selon la présente invention, sur des parois verticales ou fortement inclinées, nécessite uniquement une ossature par rangée, les bardages étant autoportants et mécaniquement rigides, y compris, au-delà de leurs poids propres, avec la charge de la matière végétale, du substrat et de la composition d'arrosage ou de l'eau absorbée. La continuité surfacique de la paroi est totale tout en permettant une démontabilité.

Le but est également d'associer à ce bardage végétalisé des éléments complémentaires comme des isolants et autres films de protection des façades, en rapportant le bardage selon la présente invention soit sur une ossature de façade soit directement sur la façade, lesdits éléments complémentaires de protection étant interposés entre la façade et le bardage.

L'invention couvre également le procédé de fabrication du bardage selon la présente invention. Le procédé vise une fabrication par pliage de façon à conserver une qualité monolithique au bardage et à lui assurer ses propres qualités de résistance mécanique.

La présente invention est maintenant décrite à l'aide d'exemples uniquement illustratifs et nullement limitatifs de la portée de l'invention, et à partir des illustrations jointes, sur lesquelles :
[Fig. 1] représente une vue en perspective du bardage selon la présente invention, monté sur trois rangées superposées verticalement, sans substrat et sans plants.
[Fig. 2] représente une vue en coupe transversale du bardage selon la présente invention, monté sur trois rangées superposées verticalement, sans substrat et sans plants.
[Fig. 3] représente une vue en coupe transversale du bardage selon la présente invention, avec substrat mais sans plant végétal.
[Fig. 4] représente une vue en coupe transversale du bardage selon la présente invention, sans substrat et plant végétal, schématisant la circulation de la composition d'arrosage et/ou de l'eau de précipitation.
[Fig. 5A] représente un synoptique de la première étape du procédé de fabrication.
[Fig. 5B] représente un synoptique de la deuxième étape du procédé de fabrication.
[Fig. 5C] représente un synoptique de la troisième étape du procédé de fabrication.

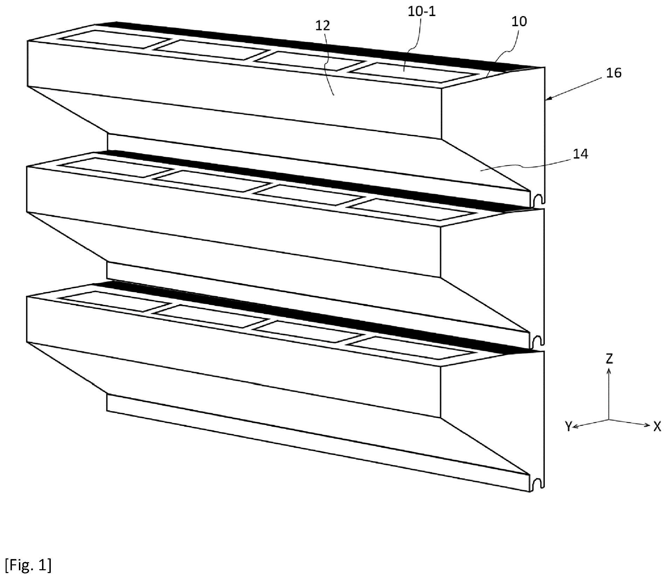

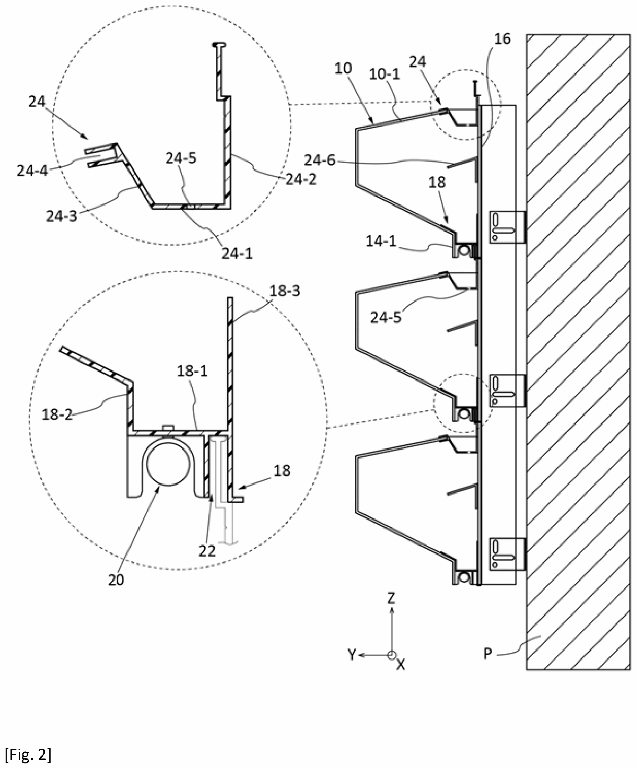

Le bardage de l'invention est illustré sur les figures 1 et 2, sous forme d'une juxtaposition de 3 dispositifs, verticalement. Chaque dispositif est indépendant et peut être rapporté sur une structure porteuse associée à une paroi P, Chaque dispositif comprend une section trapézoïdale couchée, avec une face supérieure 10, une face avant 12, une face inférieure 14 et une face arrière 16. La face arrière 16 est la face en regard de la paroi P, verticale ou fortement inclinée, supportant ledit dispositif. La face avant 12 est donc la face visible. Le dispositif comprend un axe longitudinal X qui est parallèle à la paroi P et horizontal, un axe transversal Y qui est horizontal et perpendiculaire à la paroi P et un axe Z, qui est vertical et parallèle à la paroi P. Le dispositif est obturé, de façon connue, latéralement par des joues pour former un volume fermé. Ces joues sont avantageusement venues de découpe avec les différentes faces comme cela sera expliqué plus avant.

La face supérieure 10 est, de façon avantageuse, inclinée de l'arrière vers l'avant, vers le bas. Cette inclinaison est de 15°, ceci pour donner un ordre d'idée, sans aucune notion limitative. Cette face supérieure 10 comporte des fenêtres 10-1, disposées suivant l'axe longitudinal X. Ces fenêtres résultent de découpes, de façon avantageuse avec des congés de façon à éviter de blesser les plants lors de mouvements induits par le vent par exemple, ainsi que cela sera expliqué plus avant. Cette face supérieure 10 est liée à la face avant 12.

La face avant 12 est sensiblement parallèle à la paroi P supportant le dispositif. Elle ne présente aucune ouverture. La face avant 12 est liée mécaniquement à la face inférieure 14.

La face inférieure 14 est inclinée de la face avant vers la face arrière 16, vers le bas. L'inclinaison de la face inférieure 14 est plus prononcée que l'inclinaison de la face supérieure 10. Cette inclinaison est de 35° vers le bas, pour donner là encore une notion de la pente sans aucun caractère limitatif. La face inférieure 14 comporte sur son bord arrière un retour 14-1, suivant l'axe Z. Les faces supérieure 10, avant 12 et inférieure 14 forment un ensemble monolithique. La face inférieure 14 est reliée à la face arrière 16 par une pièce de liaison inférieure 18. La face arrière 16 comprend une plaque destinée à recevoir les moyens de liaison sur la structure porteuse associée à la paroi P.

La pièce de liaison inférieure 18 comporte un profil, à section en U, orienté suivant l'axe longitudinal X. Le profil en U est ouvert suivant l'axe Z vers le haut. Ce profil comprend un fond 18-1, une aile avant 18-2 apte à être solidarisée de façon étanche avec la face inférieure 14, par exemple par collage ou soudure et une aile arrière 18-3 apte à être solidarisée de façon étanche avec la face arrière 16, par exemple par collage ou soudure. Cette pièce de liaison inférieure 18 comprend sous le fond 18-1, des moyens de distribution 20 de la composition d'arrosage ou de l'eau et une fente 22 de raccordement, en U renversé, juxtaposée à la face arrière 16. Les moyens de distribution d'eau 20 comprennent un clip et un tuyau de goutte à goutte par exemple. Cette pièce de liaison inférieure 18 agit comme une nervure et ses formes anguleuses, venues de fabrication par moulage ou extrusion d'un profil, lui confèrent une rigidité très importante dans toutes les directions.

La face arrière 16 est donc solidaire de la pièce de liaison inférieure 18 et se prolonge dans le plan des axes longitudinal X et vertical Z, parallèlement à la paroi P. Cette face arrière 16 est également solidaire, en partie haute d'une pièce de liaison supérieure 24, de forme en U, ouverte vers le haut suivant l'axe Z. Cette pièce de liaison supérieure 24 comporte un fond 24-1, une aile arrière 24-2 et une aile avant 24-3. L'aile arrière 24-2 est fixée à la face arrière 16, par collage ou par soudage et l'aile avant 24-3 est fixée à la face supérieure 10, de façon à constituer avec les autres faces, une section fermée. La fixation de l'aile avant 24-3 et de la face 10 est réalisée par collage ou soudage. De façon complémentaire et de façon à renforcer la liaison, de façon optionnelle, l'aile avant de la pièce de liaison supérieure 24 comprend un montage par emboîtement, l'aile avant 24-3 étant munie à cet effet d'une rainure 24-4 destinée à recevoir le bord libre de la face supérieure 10. Le fond 24-1 de cette pièce de liaison supérieure 24, est muni de moyens de communication 24-5, en l'occurrence des trous afin de laisser passer des fluides liquides du profil en U de la pièce de liaison supérieure 24 dans l'espace délimité par les 4 parois 10, 12, 14, 16. La face arrière 16 porte également un déflecteur 24-6, ledit déflecteur de déviation étant rapporté par collage ou par soudage, sur la face arrière 16 et se prolongeant vers l'avant sur une distance sensiblement égale à la dimension transversale suivant l'axe Y de la pièce de liaison supérieure 24.

Les pièces de liaison inférieure 18 et supérieure 24 sont d'une dimension transversale sensiblement égale et forment des raidisseurs du dispositif selon l'invention. Les extrémités arrière des faces supérieure 10 et inférieure 14 sont sensiblement alignées suivant l'axe Z. On constate aussi que les dispositifs superposés forment une continuité dans le plan vertical car la partie supérieure de l'aile arrière 24-2 de la pièce de liaison supérieure 24 du dispositif vient se loger dans la fente 22 de raccordement en U de la pièce de liaison inférieure 18 du dispositif disposé au-dessus.

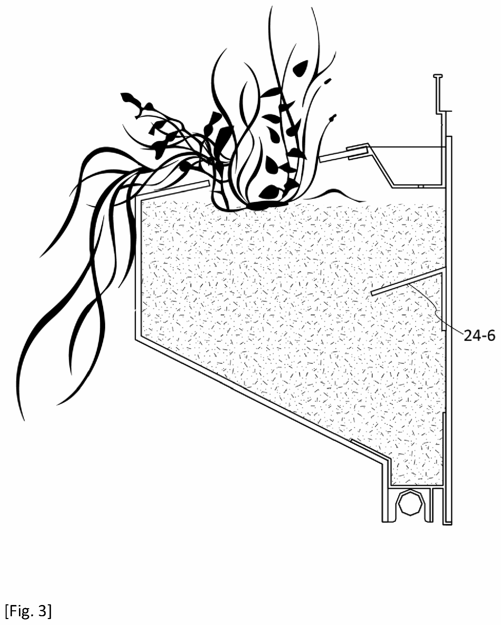

Le bardage avec substrat et plants est représenté sur la figure 3. Chaque dispositif comprend un volume de substrat en adéquation avec le volume dudit dispositif pour conduire la surface libre dudit substrat à proximité des fenêtres 10-1. Des plants peuvent être alors introduits dans le substrat pour s'y développer. L'inclinaison de la paroi supérieure 10 et l'inclinaison de la paroi inférieure 14 du dispositif superposé au-dessus, s'il est présent, dégagent l'espace pour un tel développement et pour permettre auxdits plants de retomber devant la face avant 12 si cela est possible et/ou nécessaire, en fonction de la variété cultivée. On note que le substrat est conservé à l'abri du rayonnement solaire direct, tout comme les racines, et à l'abri des précipitations pour les plants d'un dispositif qui est sous un autre dispositif.

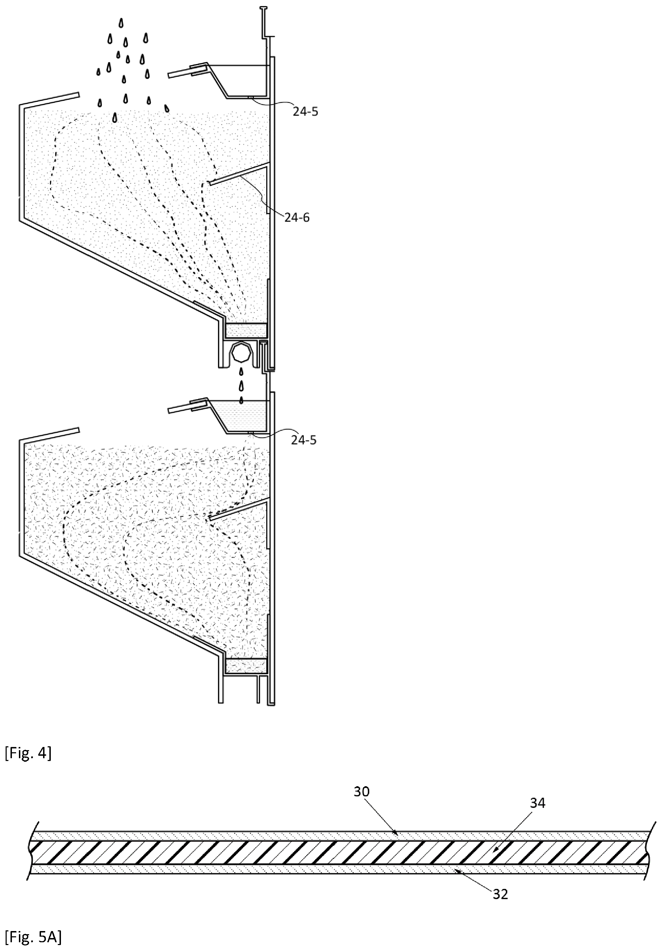

La circulation de l'eau et/ou de la composition d'arrosage est indiquée sur la figure 4. La composition d'arrosage est émise par les moyens de distribution de la composition 10. De façon générale, le pilotage des moyens de distribution de la composition d'arrosage est effectué par un automate du commerce, ne faisant pas partie de la présente invention, la programmation non plus. La composition d'arrosage distribuée s'écoule dans le U de la pièce de liaison supérieure 24 et passe à travers les ouvertures 24-5 pour venir d'infiltrer à travers le substrat. Le déflecteur 24-6 assure une déflection de la composition d'arrosage ou de l'eau vers le centre du volume de substrat afin d'homogénéiser avantageusement la diffusion au sein dudit substrat. Ceci est d'autant plus important lorsque le dispositif est soumis à de fortes intempéries et à une introduction par les fenêtres d'un volume d'eau non contrôlable. Certes, généralement la distribution de composition d'arrosage est interrompue mais cette déflection évite une circulation suivant un parcours trop privilégié. Ce déflecteur est optionnel mais peut s'avérer d'une grande utilité.

La fixation des dispositifs sur la paroi P est réalisable par tout moyen adapté, en fonction de la nature de la paroi P. Pour constituer un bardage, il convient de disposer les dispositifs selon l'invention, juxtaposés, en rangées horizontales et verticales.

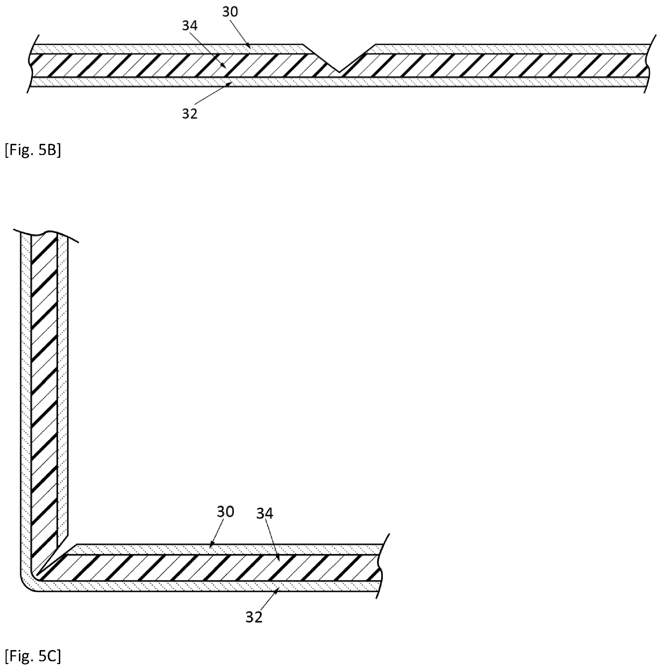

Afin de conférer les propriétés mécaniques nécessaires, il est possible, selon un mode de réalisation préféré et non limitatif, de recourir à des panneaux sandwich pour la réalisation des 4 faces. De tels panneaux sont constitués, comme montré sur les figures 5, de deux peaux en aluminium 30, 32 de très faible épaisseur, quelques dixièmes de millimètres, et d'une âme 34 en un matériau léger et difficilement compressible de quelques millimètres. Un tel panneau est représenté de façon schématique sur la figure 5A. Sur la figure 5B, on a représenté un usinage en Vé, de l'une des peaux, sur le flan à plat avant pliage, sur une profondeur égale sensiblement à l'épaisseur de la première peau et sur quasiment toute l'épaisseur de l'âme. Sur la figure 5C, on constate qu'un pliage angulaire à 90° et a fortiori selon une valeur angulaire moindre mais aussi supérieure, est rendu possible le long dudit usinage, tout en assurant la continuité surfacique de l'une des peaux, donc la liaison mécanique et l'étanchéité sont conservés.

Ces panneaux sandwich assurent une rigidité mécanique suffisante pour conférer à chaque dispositif des propriétés d'auto portance liées à la structure sandwich, une durabilité du fait des feuilles extérieures en matériau métallique. De plus les faces sont liées aux deux pièces de liaison supérieure 24 et inférieure 22, ce qui assure une indéformabilité certaine et la constitution d'un bardage aux normes en plus d'une esthétique satisfaisante. Les pièces de liaisons inférieure et supérieure permettent de finaliser le profil fermé des 4 faces de chaque dispositif avec les joues d'extrémité, bien entendu. Ces joues, à chaque extrémité, sont également avantageusement de volets découpés, venus de pliage à partir d'un flan initial. Des cornières intérieures, collées ou soudées assurent le maintien des volets ainsi pliés aux faces supérieure, avant et inférieure.

On note aussi que la nature du polymère pris en sandwich doit être choisie insensible à l'eau et à l'humidité car les tranches, notamment au niveau des fenêtres, sont particulièrement exposées. La face extérieure de la peau extérieure du complexe peut recevoir une décoration, un traitement de surface colorisant etc.

## Revendications

1. Bardage pour la culture de plants de végétalisation, comportant au moins deux dispositifs comprenant chacun une face supérieure (10), munie de fenêtres (10-1), une face avant (12), une face inférieure (14) et une face arrière (16), une pièce de liaison inférieure (18) interposée entre la face inférieure (14) et la face arrière (16) et une pièce de liaison supérieure (24) interposée entre la face supérieure (10) et la face arrière (16), l'ensemble formant une section fermée, ledit dispositif étant destiné à être positionné avec sa face arrière (16) en regard d'une paroi P, verticale ou fortement inclinée, supportant ledit dispositif, et des joues d'extrémité ;
dans lequel, pour chaque dispositif :
- la pièce de liaison inférieure (18) présente un profil, à section en U, avec un fond (18-1), une aile avant (18-2) apte à être solidarisée de façon étanche avec la face inférieure (14), une aile arrière (18-3) apte à être solidarisée de façon étanche avec la face arrière (16) et des moyens de distribution (20) d'une composition d'arrosage ainsi qu'une fente (22) de raccordement, en U renversé ;
- la pièce de liaison supérieure (24) présente un profil, à section en U ouverte vers le haut, un fond (24-1), une aile arrière (24-2) et une aile avant (24-3), l'aile avant (24-3) étant munie d'une rainure (24-4) destinée à recevoir la face supérieure (10) et le fond (24-1) est muni de moyens de communication (24-5) ;
les deux dispositifs étant juxtaposés en rangée verticale, la partie supérieure de l'aile arrière de la pièce de liaison supérieure du dispositif disposé en-dessous venant se loger dans la fente de raccordement en U renversé de la pièce de liaison inférieure du dispositif disposé au-dessus.

2. Bardage pour la culture de plants de végétalisation, selon la revendication 1, **caractérisé en ce que** la face supérieure (10) est inclinée vers l'avant, vers le bas.

3. Bardage pour la culture de plants de végétalisation, selon la revendication 2, **caractérisé en ce que** l'angle d'inclinaison de la face avant est de 15°.

4. Bardage pour la culture de plants de végétalisation, selon l'une quelconque des revendications précédentes, **caractérisé en ce que** la face inférieure (14) est inclinée vers l'arrière, vers le bas.

5. Bardage pour la culture de plants de végétalisation, selon la revendication 4, **caractérisé en ce que** l'angle d'inclinaison de la face arrière est de 35°.

6. Bardage pour la culture de plants de végétalisation, selon l'une quelconque des revendications précédentes, **caractérisé en ce qu'**il comprend un déflecteur (24-6), ledit déflecteur étant rapporté, sur la face arrière (16).

7. Procédé de fabrication d'un bardage selon l'une quelconque des revendications précédentes, **caractérisé en ce qu'**il consiste à utiliser un complexe comprenant une âme (34), en matériau insensible à l'eau et à l'humidité, interposée entre deux peaux (30, 32), en matériau métallique, à usiner l'une des deux peaux et l'âme sur au moins une partie de son épaisseur, à plier de part et d'autre dudit usinage, de façon à réaliser les différentes faces (10, 12, 14, 16) dudit bardage en assurant une continuité surfacique.

## Patentansprüche

1. Fassadenverkleidung für die Kultivierung von Begrünungspflanzen mit mindestens zwei Vorrichtungen, umfassend jeweils eine Oberseite (10), die mit Fenstern (10-1) versehen ist, eine Vorderseite (12), eine Unterseite (14) und eine Rückseite (16), ein unteres Verbindungsstück (18), das zwischen der Unterseite (14) und der Rückseite (16) eingesetzt ist, und ein oberes Verbindungsstück (24), das zwischen der Oberseite (10) und der Rückseite (16) eingesetzt ist, wobei die Einheit einen geschlossenen Querschnitt ausbildet, wobei die Vorrichtung dafür vorgesehen ist, mit ihrer Rückseite (16) gegenüber einer vertikalen oder stark geneigten Wand P, die die Vorrichtung trägt, und Abschlussplatten positioniert zu werden;
wobei, für jede Vorrichtung:
- das untere Verbindungsstück (18) ein Profil mit U-förmigem Querschnitt mit einem Boden (18-1), einem vorderen Flügel (18-2), der geeignet ist, dicht mit der Unterseite (14) verbunden zu werden, einem hinteren Flügel (18-3), der geeignet ist, dicht mit der hinteren Fläche (16) zusammengefügt zu werden, und Verteilungsmittel (20) für eine Bewässerungszusammensetzung sowie einen umgekehrt U-förmigen Anschlussschlitz (22) aufweist;
- das obere Verbindungsstück (24) ein Profil mit einem nach oben offenen U-förmigen Querschnitt, einem Boden (24-1), einem hinteren Flügel (24-2) und einem vorderen Flügel (24-3) aufweist, wobei der vordere Flügel (24-3) mit einer Nut (24-4) versehen ist, die dafür vorgesehen ist, die Oberseite (10) aufzunehmen, und der Boden (24-1) mit Verbindungsmitteln (24-5) versehen ist;
die zwei Vorrichtungen in vertikaler Reihe nebeneinanderliegend sind, wobei der obere Teil des hinteren Flügels des oberen Verbindungsstücks der unten angeordneten Vorrichtung in den umgekehrt U-förmigen Verbindungsschlitz des unteren Verbindungsstücks der oben angeordneten Vorrichtung eingreift.

2. Fassadenverkleidung für die Kultivierung von Begrünungspflanzen nach Anspruch 1, **dadurch gekennzeichnet, dass** die Oberseite (10) nach vorne, nach unten geneigt ist.

3. Fassadenverkleidung für die Kultivierung von Begrünungspflanzen nach Anspruch 2, **dadurch gekennzeichnet, dass** der Neigungswinkel der Vorderseite 15° beträgt.

4. Fassadenverkleidung für die Kultivierung von Begrünungspflanzen nach einem der vorstehenden Ansprüche, **dadurch gekennzeichnet, dass** die Unterseite (14) nach hinten, nach unten geneigt ist.

5. Fassadenverkleidung für die Kultivierung von Begrünungspflanzen nach Anspruch 4, **dadurch gekennzeichnet, dass** der Neigungswinkel der Rückseite 35° beträgt.

6. Fassadenverkleidung für die Kultivierung von Begrünungspflanzen nach einem der vorstehenden Ansprüche, **gekennzeichnet dadurch, dass** sie einen Deflektor (24-6) umfasst, wobei der Deflektor an der Rückseite (16) angebracht ist.

7. Verfahren zum Herstellen einer Verkleidung nach einem der vorstehenden Ansprüche, **gekennzeichnet dadurch, dass** es darin besteht, einen Komplex zu verwenden, umfassend einen Kern (34) aus einem gegen Wasser und Feuchtigkeit unempfindlichen Material, der zwischen zwei Außenschichten (30, 32) aus metallischem Material eingesetzt ist, eine der zwei Außenschichten und den Kern über mindestens einen Teil ihrer Dicke zu fertigen, auf beiden Seiten der Fertigung zu biegen, um die verschiedenen Seiten (10, 12, 14, 16) der Fassadenverkleidung zu realisieren, wobei eine Oberflächenkontinuität gewährleistet wird.

## Claims

1. Cladding for cultivating greening plants, comprising at least two devices each having an upper face (10) provided with windows (10-1), a front face (12), a lower face (14) and a rear face (16), a lower connecting piece (18) interposed between the lower face (14) and the rear face (16), and an upper connecting piece (24) interposed between the upper face (10) and the rear face (16), the assembly forming a closed portion, said device being intended to be positioned having the rear face (16) thereof opposite a vertical or steeply inclined wall P supporting said device, and said device having end cheeks;
wherein, for each device:
- the lower connecting piece (18) has a profile, having a U-shaped cross section, together with a base (18-1), a front flange (18-2) capable of being sealingly secured to the lower face (14), a rear flange (18-3) capable of being sealingly secured to the rear face (16) and a distribution means (20) for a spraying composition, and a connecting slot (22) in the shape of an inverted U;
- the upper connecting piece (24) has a profile, having an upwardly open, U-shaped cross section, a base (24-1), a rear flange (24-2) and a front flange (24-3), the front flange (24-3) being provided with a groove (24-4) for receiving the upper face (10), and the base (24-1) is provided with communication means (24-5);
the two devices being juxtaposed in a vertical row, the upper portion of the rear flange of the upper connecting piece of the device arranged below being received in the connecting slot, in the shape of an inverted U, of the lower connecting piece of the device arranged above.

2. Cladding for cultivating greening plants, according to claim 1, **characterized in that** the upper face (10) is inclined so as to extend downward toward the front.

3. Cladding for cultivating greening plants, according to claim 2, **characterized in that** the angle of inclination of the front face is 15°.

4. Cladding for cultivating greening plants, according to any of the preceding claims, **characterized in that** the lower face (14) is inclined so as to extend downward toward the rear.

5. Cladding for cultivating greening plants, according to claim 4, **characterized in that** the angle of inclination of the rear face is 35°.

6. Cladding for cultivating greening plants, according to any of the preceding claims, **characterized in that** said cladding comprises a deflector (24-6), said deflector being mounted on the rear face (16).

7. Method for manufacturing a cladding according to any of the preceding claims, **characterized in that** said method consists in using a multilayer structure comprising a core (34) made of material insensitive to water and moisture, which material is interposed between two skins (30, 32) made of metal material, in machining one of the two skins and the core over at least a portion of the thickness thereof, and in bending on either side of said machining so as to produce the various faces (10, 12, 14, 16) of said cladding while ensuring surface continuity.
